# FASCICULE DE BREVET EUROPEEN

(11) **EP 3 123 700 B1**
(45) Date de publication et mention de la délivrance du brevet: **29.04.2020**
(21) Numéro de dépôt: 15732020.1
(22) Date de dépôt: 26.03.2015
(51) Int. Cl.: H04L 29/08, H04N 21/231, H04N 21/222, H04L 29/06, H04N 21/239

(54) **PROCEDE DE MISE EN CACHE D'UN CONTENU DANS UN RESEAU DE DISTRIBUTION DE CONTENUS**
VERFAHREN ZUR ZWISCHENSPEICHERUNG EINES INHALTSELEMENTS IN EINEM INHALTSVERTEILUNGSNETZWERK
METHOD FOR CACHING A PIECE OF CONTENT IN A CONTENT DISTRIBUTION NETWORK

(30) Priorité: 28.03.2014 FR 1452751
(43) Date de publication de la demande: 01.02.2017
(73) Titulaire: Orange, 75015 Paris (FR)
(72) Inventeur: FIEAU, Frédéric, F-75013 Paris (FR); FROMENTOUX, Gaël, F-22560 Pleumeur Bodou, Ile Grande (FR); STEPHAN, Emile, F-22560 Pleumeur Bodou, Ile Grande (FR)
(86) Numéro de dépôt international: PCT/FR2015/050772
(87) Numéro de publication internationale: WO 2015/145079

(56) Documents cités:
- US-A1- 2002 016 911
- US-A1- 2002 091 792
- US-A1- 2005 010 653
- ADAM STUBBLEFIELD ET AL: "Managing the Performance Impact of Web Security", ELECTRONIC COMMERCE RESEARCH, KLUWER ACADEMIC PUBLISHERS, BO, vol. 5, no. 1, 1 janvier 2005 (2005-01-01) , pages 99-116, XP019206445, ISSN: 1572-9362, DOI: 10.1023/B:ELEC.0000045975.59531.08

## Description

L'invention se situe dans le domaine de la distribution de contenus dans un réseau de communication et concerne plus particulièrement une technique de mise en cache d'un contenu dans un réseau de distribution de contenus.

Il est connu pour un opérateur d'utiliser des réseaux de distribution de contenus pour distribuer des contenus dans un réseau de communication. Généralement, ces réseaux comprennent des serveurs d'origine et des serveurs substituts. Les serveurs d'origine sont des serveurs à partir desquels les contenus sont introduits dans les réseaux de distribution de contenus. Il s'agit par exemple de fournisseurs de contenus (e.g. producteurs de contenus audiovisuels) proposant leurs contenus à des gestionnaires de sites Internet ou encore à des fournisseurs d'accès Internet. Ces contenus sont ensuite dupliqués en fonction par exemple de leur popularité, sur des serveurs substituts situés au plus près de point d'accès à l'Internet (ou « point of presence » en anglais). Les réseaux de distribution de contenus comportent un mécanisme de routage permettant de servir une demande d'un utilisateur relative à un contenu par le serveur substitut situé au plus près du point d'accès de l'utilisateur. Ces serveurs substituts permettent ainsi de ne pas solliciter les serveurs d'origine et de diminuer les coûts d'acheminement lors de la livraison de contenus. Il est également souligné que les réseaux de distribution de contenus permettent de distribuer tout type de contenu. Il peut s'agir de contenus audiovisuels tels que des fichiers vidéo ou audio, de flux destinés à être lus en continu. Un contenu désigne ainsi un contenu dit « entier » (e.g. totalité d'un fichier vidéo ou audio) ou encore un contenu constitué d'un ou plusieurs segments d'un contenu entier.

Par ailleurs, de nouveaux acteurs se positionnent dans la chaîne de distribution de contenus. Ceux-ci mettent en œuvre des serveurs mandataires auxquels sont associés des modules de navigation. Ces serveurs mandataires, également appelés « Browser Accelerator », possèdent généralement leurs propres fonctions de duplication de contenus, ainsi que des fonctions de compression de données, d'optimisation des requêtes, de filtrage, dans le but de réduire les temps d'accès pour un utilisateur à un service ou à un contenu requis. Les solutions de duplication de contenus fournies par ces serveurs mandataires présentent cependant des inconvénients. Les contenus dupliqués sont généralement mémorisés au niveau de points d'appairage entre le réseau auquel appartiennent de tels serveurs mandataires, et le réseau par exemple d'un fournisseur d'accès Internet. Un utilisateur du réseau du fournisseur d'accès Internet ne peut ainsi obtenir un contenu souhaité via son module de navigation que depuis des serveurs substituts situés à l'interconnexion du réseau du fournisseur d'accès à l'Internet et du réseau auquel appartiennent de tels serveurs mandataires. Ces solutions ne permettent pas de dupliquer un contenu au plus près de l'accès d'un utilisateur du réseau du fournisseur d'accès Internet, ce qui a entre autre pour effet de générer un trafic important au sein du réseau.

Le document US 2005/0010653 décrit une méthode de fourniture d'un contenu à un client par la mise en œuvre de réseaux de distribution de contenus dans un réseau interconnectant un ensemble de fournisseurs de contenus et de clients.

Le document US 2002/0091792 décrit une méthode de partage de contenu permettant à un client recevant un contenu diffusé depuis un serveur central de le stocker dans un cache local et de le mettre à disposition d'autres clients.

En outre, les discussions relatives à la définition de la prochaine version du protocole HTTP, le « HTTP 2.0 » au sein de l'IETF (pour « Internet Engineering Task Force ») s'orientent vers un usage par les modules de navigation des protocoles d'échanges sécurisés généralisé à l'ensemble du trafic émis par ces derniers. Ceci pose plus particulièrement problème dans le contexte de la distribution de contenus, où de tels échanges sécurisés ne permettent pas à un fournisseur d'accès Internet d'accéder à l'objet d'une demande relative à un contenu. Le fournisseur d'accès est ainsi dans l'impossibilité d'obtenir des informations lui permettant de déterminer le contenu demandé, et d'obtenir le contenu afin de mettre en œuvre une politique de mise en cache de ce contenu via son propre réseau de distribution.

Un des buts de l'invention est de remédier à des insuffisances/inconvénients de l'état de la technique et/ou d'y apporter des améliorations.

Selon un premier aspect l'invention concerne un procédé de mise en cache d'un contenu dans un réseau de distribution de contenus, ce réseau de distribution étant un réseau d'un premier réseau de communication, un module de navigation s'exécutant sur un terminal utilisateur et permettant d'accéder à des contenus au moyen de sessions chiffrées, le module de navigation étant associé à un serveur mandataire d'un deuxième réseau de communication interconnecté avec le premier réseau de communication, le serveur mandataire contrôlant un état de session en cours entre le module de navigation et un fournisseur de contenus, le procédé comprenant les étapes suivantes :
- envoi par le module de navigation d'une demande relative au contenu au fournisseur de contenus ;
- obtention par le serveur mandataire, depuis le module de navigation, d'au moins une information relative à la demande ;
- réception par le module de navigation du contenu demandé en provenance du fournisseur de contenus ;
- commande par le serveur mandataire au module de navigation, d'une mise en cache, du contenu dans le réseau de distribution de contenus.

Le procédé propose ainsi une solution pour mettre en cache un contenu dans par exemple un réseau de distribution de contenus d'un fournisseur d'accès Internet, permettant de dupliquer le contenu au plus près de l'accès des utilisateurs du réseau du fournisseur d'accès. Du fait d'un traitement plus efficace des demandes relatives au contenu, le trafic au sein du réseau du fournisseur, s'en trouve réduit. Les utilisateurs du réseau du fournisseur d'accès Internet demandant un contenu qui a été mis en cache dans le réseau de distribution du fournisseur d'accès, bénéficient en outre d'une distribution plus rapide. La satisfaction utilisateur est ainsi accrue.

Cette mise en cache est par ailleurs rendue possible lorsque les messages sortants envoyés depuis le module de navigation sont chiffrés. Le procédé peut ainsi avantageusement être mis en œuvre par des modules de navigation utilisant le protocole HTTP 2.0/TLS pour les messages qu'ils émettent. En particulier, le contenu étant obtenu depuis le terminal utilisateur, le procédé permet d'introduire le contenu non chiffré dans le réseau de distribution de contenus afin de le mettre en cache. Il est ainsi possible de bénéficier des avantages d'une distribution du contenu par l'intermédiaire d'un réseau de distribution de contenus au plus près des utilisateurs. La sécurisation des échanges relatifs aux contenus demandés est néanmoins maintenue dans la mesure où la mise en cache du contenu dans le réseau de distribution de contenus se fait uniquement sur commande du réseau.

Selon une caractéristique particulière, le contrôle de l'état de session en cours consiste à vérifier que la demande relative au contenu est redirigée par le serveur mandataire vers le fournisseur de contenu, après que le serveur mandataire ait reçu la demande via une session chiffrée établie avec le module de navigation, l'obtention de la au moins une information relative à la demande étant obtenue lors de la réception de la demande par le serveur mandataire.

Le serveur mandataire est dans ce cas dit être en « coupure de flux ». Plus précisément, une session chiffrée est établie entre le module de navigation et le serveur mandataire auquel il est associé. Lorsqu'une demande relative à un contenu à destination d'un fournisseur de contenus est envoyée depuis le module de navigation, elle est d'abord envoyée au serveur mandataire par l'intermédiaire de cette session chiffrée, puis redirigée ensuite par ce dernier vers le fournisseur de contenus. Le serveur mandataire a ainsi en permanence accès au contenu des messages reçus du module de navigation. Il peut notamment obtenir en temps réel des informations relatives à un contenu demandé. Le contenu demandé est ainsi aisément identifié, ce qui a pour effet de simplifier et de limiter les échanges avec le serveur mandataire lors de la mise en œuvre du procédé de mise en cache. Le serveur mandataire a de fait un accès immédiat aux données transitant via la session chiffrée. L'étape d'obtention d'informations relatives au contenu demandé ne nécessite donc pas, en plus de la demande relative à un contenu, l'envoi au serveur mandataire de rapports relatifs aux demandes de contenus émises par le module de navigation selon par exemple un mode asynchrone.

En outre cette réduction des échanges, permise par cette configuration particulière du serveur mandataire, permet d'accélérer la mise en cache du contenu demandé.

Selon une caractéristique particulière, le procédé comprend en outre les étapes suivantes mises en œuvre par un serveur de contrôle appartenant au premier réseau de communication :
- réception, depuis le serveur mandataire, d'une notification indiquant qu'au moins une demande relative au contenu a été émise par le terminal sur lequel s'exécute le module de navigation ayant émis la demande ;
- sélection, en fonction du contenu et du terminal, d'un réseau de distribution de contenus dans lequel mettre en cache le contenu parmi un ensemble de réseaux de distribution de contenus appartenant au premier réseau de communication ;
- envoi au serveur mandataire d'un identifiant du réseau de distribution sélectionné.

La sélection d'un réseau de distribution de contenus est centralisée au niveau du serveur de contrôle. Ce dernier permet par exemple de choisir le réseau de distribution de contenus en fonction de critères de proximité des points d'accès des utilisateurs du réseau d'un fournisseur d'accès Internet, de disponibilité des réseaux de distribution de contenus candidats, ou encore en fonction du type de contenu à mettre en cache. Le serveur de contrôle permet ainsi de choisir un réseau de distribution adapté au contenu et/ou au terminal à partir duquel a été émise une demande relative à un contenu. Dans le cas par exemple où ce réseau est celui d'un fournisseur d'accès Internet, le serveur mandataire qui n'a pas accès aux réseaux de distribution de contenus du fournisseur, est en mesure de commander une mise en cache d'un contenu demandé, dans un réseau de distribution de contenus choisi par le fournisseur d'accès. Cette sélection est notamment rendu possible par le fait que contrairement au serveur mandataire, le serveur de contrôle est localisé dans le réseau du fournisseur et dispose d'une connaissance globale des réseaux de distributions de contenus appartenant au réseau du fournisseur. En outre la confidentialité des informations dont dispose le serveur de contrôle pour la sélection d'un réseau de distribution de contenus, notamment sur la structure du réseau du fournisseur d'accès, est préservée. Ces informations ne sont en effet pas communiquées au serveur mandataire.

La gestion centralisée des réseaux de distribution de contenus par le serveur de contrôle facilite par ailleurs la maintenance des infrastructures mettant en œuvre le procédé. L'ajout ou le retrait d'un réseau de distribution de contenus, mais également la sélection d'un réseau de distribution alternatif en cas d'indisponibilité d'un réseau de distribution de contenus sont simples à mettre en œuvre et sont sans impacts sur les autres équipements du réseau.

La sélection du réseau de distribution permet en outre une différenciation des services offerts en fonction du contenu demandé, et/ou du terminal par l'intermédiaire duquel une demande a été émise. Elle permet par exemple d'associer un réseau de distribution de contenus à des contenus nécessitant un type de distribution particulier (e.g. streaming, diffusion restreinte). Un réseau de distribution de contenus peut de même être associé à certains types de terminaux, pour lesquels des critères de qualité ou de sécurité particuliers sont exigés quant à la distribution d'un contenu demandé.

Selon une caractéristique particulière, le procédé, comprend en outre une étape mise en œuvre par le serveur de contrôle, de réception, depuis le serveur mandataire, d'informations relatives à au moins un deuxième module de navigation ayant une session établie avec le serveur mandataire, la sélection du réseau de distribution de contenus étant réalisée à partir de ces informations.

Les informations reçues par le serveur de contrôle sont à titre d'exemple le nombre de modules de navigation ayant une session établie avec le serveur mandataire, des informations d'identification des modules de navigation (e.g. champ d'entête HTTP « User-Agent »), ou encore la liste des adresses IP des terminaux utilisateurs sur lesquels s'exécutent ces modules. Dans un réseau de téléphonie mobile, le serveur de contrôle peut ainsi localiser les terminaux à partir de leur adresse IP, et sélectionner un réseau de distribution de contenus en fonction de cette localisation.

Selon une caractéristique particulière, le procédé comprend en outre une étape d'envoi, au serveur mandataire, d'une politique de mise en cache comprenant au moins une donnée pour laquelle une mise en cache du contenu est déclenchée.

Les données comprises dans la politique de mise en cache envoyée au serveur mandataire permettent de discriminer les contenus qu'un fournisseur d'accès Internet souhaite mettre en cache. Ces données sont par exemple un identifiant d'une ressource réseau (e.g. une adresse universelle), un identifiant d'un fournisseur de contenus (e.g. adresse IP pour *Internet Protocol*) ou plus généralement un identifiant d'une ressource référençant plusieurs contenus. Elles peuvent également faire référence à une plage d'adresses. Elles permettent ainsi de restreindre une mise en cache dans un réseau de distribution du fournisseur d'accès Internet à des contenus précisément identifiés ou à des contenus fournis par des ressources précisément identifiés. Ces données ne sont pas limitées à des identifiants faisant référence à des contenus, il peut également s'agir d'indicateurs d'un niveau de qualité pour des contenus à mettre en cache, ou encore d'indicateurs de popularité d'un contenu. Une mise en cache peut ainsi avantageusement être restreinte à des contenus présentant un niveau de qualité supérieur à un niveau de qualité prédéfini, ou encore être restreinte à des contenus pour lesquels un nombre minimum de demandes relatives au contenu est vérifié par le serveur mandataire. Il est également à noter que ces données, qui constituent des critères permettant de décider si un contenu doit être mis en cache dans un réseau de distribution du fournisseur d'accès, peuvent être combinées entre elles afin de former de nouveaux critères de décision.

Selon une caractéristique particulière, la au moins une donnée comprise dans la politique de mise en cache est une liste d'adresses universelles, le procédé comprenant en outre une étape de vérification, par le serveur mandataire, à l'aide de la au moins une information relative à la demande que la demande est à destination d'un fournisseur de contenus appartenant à la liste d'adresses universelles, la commande de mise en cache du contenu étant alors conditionnée par l'appartenance du fournisseur de contenus à la liste.

Une adresse universelle (« Uniform Resource Locator » en anglais) désigne une chaîne de caractères utilisée pour adresser les ressources mises à disposition sur le réseau Internet. Ces ressources peuvent être de différents types : document HTML, image, son, vidéo, site web, etc. Ces adresses peuvent en particulier désigner un serveur d'un fournisseur de contenus, un serveur d'un réseau de distribution de contenus, ou bien encore les contenus eux-mêmes fournis par ces serveurs. La liste d'adresses universelles permet ainsi de restreindre la mise en cache de contenus à un nombre prédéterminé de ces ressources. Elle permet en particulier de ne pas envoyer une commande de mise en cache pour un contenu provenant d'un tiers pour lequel une mise en cache n'est pas souhaitée. La mise en cache d'un contenu est ainsi uniquement mise en œuvre pour des tiers de confiance. Elle permet notamment de prémunir le premier réseau (celui par exemple d'un fournisseur d'accès Internet) d'une introduction de contenus susceptibles de présenter un risque pour son intégrité.

Différentes politiques relatives à la distribution de contenus peuvent par ailleurs être obtenues par une définition particulière de la liste d'adresses universelles. Un fournisseur d'accès Internet peut par exemple construire une liste pour un type de fournisseur de contenus particulier (e.g. liste comprenant uniquement des fournisseurs de contenus dit « premium »).

Selon une caractéristique particulière, le procédé comprend les étapes suivantes :
- mémorisation par le serveur de contrôle d'un identifiant de contenu mis en cache en association avec un identifiant du réseau de distribution dans lequel le contenu a été mis en cache ;
et suite à la réception d'une demande ultérieure relative au contenu :
- vérification par le serveur mandataire, à l'aide de l'identifiant de contenu et de la au moins une information relative à la demande que le contenu demandé a été mis en cache ;
- redirection par le serveur mandataire de la demande vers le réseau de distribution dans lequel le contenu demandé a précédemment été mis en cache.

L'envoi des identifiants de contenu et du réseau de distribution permet d'informer le serveur mandataire des contenus qui ont été mis en cache. Une sollicitation du fournisseur de contenus par le serveur mandataire peut ainsi être évitée lorsqu'elle concerne un contenu ayant déjà bénéficié d'une mise en cache. Cela se traduit également par une diminution du nombre de messages échangés dans les réseaux mettant en œuvre le procédé.

Selon une caractéristique particulière, le procédé comprend en outre une étape d'envoi par le serveur mandataire de l'identifiant de contenu mis en cache en association avec l'identifiant du réseau de distribution dans lequel le contenu a été mis en cache à au moins un deuxième module de navigation ayant une session établie avec le serveur mandataire, une prochaine demande émise depuis le au moins un deuxième module de navigation pour le contenu demandé étant redirigée par le au moins un deuxième module de navigation vers le réseau de distribution dans lequel le contenu a été mis en cache.

Le serveur mandataire, à un instant donné, dispose en général de plusieurs sessions ouvertes avec des modules de navigation qui lui sont associés. Par l'intermédiaire de ces sessions un serveur mandataire peut informer les modules de navigation avec lesquels une session est établie, de la mise en cache d'un contenu, ainsi que du réseau de distribution de contenus dans lequel le contenu a été mis en cache. Cela permet notamment, au terminal préalablement à une demande relative à un contenu émise par son module de navigation, de vérifier directement que le contenu a déjà été mis en cache. Dans ce cas, le module de navigation redirige avantageusement la demande de contenu directement vers le réseau de distribution de contenus dans lequel le contenu a été mis en cache, sans passer par le serveur mandataire. Le traitement de la demande relative à un contenu est accéléré, et le trafic à destination du fournisseur de contenus réduit. Les coûts d'interconnexion entre le premier et deuxième réseau s'en trouvent également réduits.

Selon une caractéristique particulière, le procédé comprend en outre l'envoi, au serveur mandataire, par le serveur de contrôle, d'un ensemble d'instructions exécutables par le module de navigation, cet ensemble étant transmis, par le serveur mandataire, avec la commande demandant la mise en cache du contenu, et exécutées par le module de navigation préalablement à la mise en cache.

L'envoi d'instructions exécutables par le module de navigation, par exemple des instructions dans un langage de programmation tel que le langage javascript, permet de réaliser des prétraitements sur le contenu à mettre en cache avant sa mise effective en cache. Ces prétraitements consistent par exemple à segmenter le contenu, ou encore à l'encoder dans un autre format, afin d'en faciliter sa mise en cache et sa restitution ultérieure par le réseau de distribution de contenus. Ces opérations sont en outre avantageusement réalisées par le terminal sur lequel s'exécute le module de navigation. Les ressources de calcul des serveur de contrôle et serveur mandataire sont ainsi économisées.

En outre l'envoi d'instructions exécutables présente également l'avantage de sécuriser la commande de mise en cache. Ces instructions complexifient en effet l'obtention de la politique de mise en cache du fournisseur d'accès Internet par le serveur mandataire.

Selon un deuxième aspect, l'invention concerne un module de navigation comprenant des instructions de code de programme destinées à commander l'exécution des étapes suivantes, lorsque le module est exécuté sur un terminal :
- accéder à des contenus au moyen de sessions chiffrées et pour envoyer une demande relative à un contenu à un fournisseur de contenus ;
- recevoir un contenu demandé depuis un fournisseur de contenus ;
- recevoir depuis un serveur mandataire, une commande de mise en cache dans un réseau de distribution de contenus, d'un contenu précédemment reçu ;
- commander suite à la réception de la commande de mise en cache, l'envoi d'un contenu précédemment reçu par le terminal sur lequel s'exécute ledit module, à destination d'un réseau de distribution de contenus.

Selon un troisième aspect, l'invention concerne un serveur mandataire, associé à un module de navigation, comprenant :
- un premier module de contrôle agencé pour contrôler un état de session en cours entre le module de navigation et un fournisseur de contenus ;
- un module d'obtention agencé pour obtenir depuis le module de navigation, au moins une information relative à un contenu demandé ;
- un module de commande agencé pour commander au module de navigation une mise en cache d'un contenu reçu depuis ce dernier, dans un réseau de distribution de contenus, la commande comprenant un identifiant du réseau de distribution ;
- un deuxième module de contrôle agencé pour vérifier qu'un contenu a été mis en cache dans un réseau de distribution de contenus du réseau de communication.

Selon un quatrième aspect, l'invention propose un système de mise en cache d'un contenu dans un réseau de distribution de contenus, le réseau de distribution étant un réseau d'un premier réseau de communication, comprenant un module de navigation selon le deuxième aspect associé à un serveur mandataire selon le troisième aspect, le serveur mandataire appartenant à un deuxième réseau de communication interconnecté avec le premier réseau de communication.

Selon une caractéristique particulière, le système comprend en outre un serveur de contrôle, le serveur de contrôle appartenant au réseau de communication et étant agencé pour :
- sélectionner le réseau de distribution de contenus dans lequel mettre en cache le contenu, et pour ;
- notifier le réseau de distribution de contenus sélectionné au serveur mandataire.

Les avantages présentés pour l'une quelconque des caractéristiques particulières selon le premier aspect sont directement transposables au système de mise en cache selon le quatrième aspect.

Selon un cinquième aspect, l'invention concerne également un programme pour un serveur mandataire, comprenant des instructions de code de programme destinées à commander l'exécution des étapes du procédé précédemment décrit, lorsque ledit programme est exécuté par le serveur mandataire et un support d'enregistrement lisible par un serveur mandataire sur lequel est enregistré un programme pour un serveur mandataire.

Selon un sixième aspect, l'invention concerne un support d'enregistrement lisible par un terminal sur lequel est enregistré un module de navigation.

L'invention sera mieux comprise à l'aide de la description suivante de modes de réalisation particuliers, en référence aux dessins annexés sur lesquels :
- la figure la représente un système de mise en cache d'un contenu selon un premier mode particulier de réalisation ;
- la figure 1b représente un système de mise en cache d'un contenu selon un deuxième mode particulier de réalisation ;
- la figure 2 représente un schéma synoptique des étapes du procédé de mise en cache d'un contenu et des échanges entre équipements mettant en œuvre le procédé selon un mode particulier de réalisation ;
- la figure 3 représente un serveur mandataire selon un mode particulier de réalisation ;
- la figure 4 représente un module de navigation sous forme structurelle selon un mode particulier de réalisation.

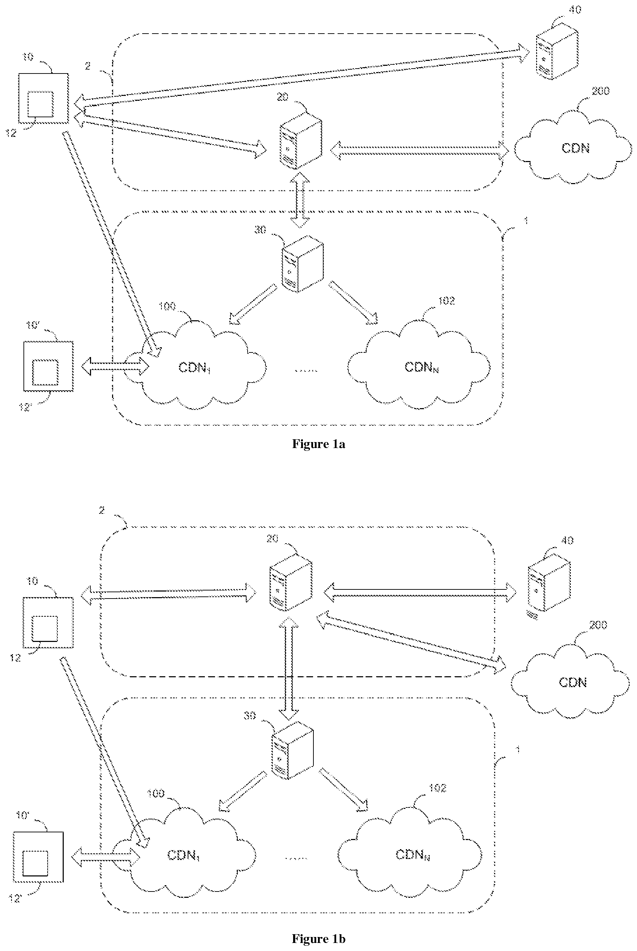

La **figure 1a** représente un système de mise en cache d'un contenu dans un réseau de distribution de contenus selon un premier mode particulier de réalisation. Le système comprend un serveur mandataire 20 auquel est associé un module de navigation 12 s'exécutant sur un terminal utilisateur 10 (e.g. ordinateur, téléphone portable, tablette), ainsi qu'un serveur de contrôle 30. Le système est agencé pour mettre en cache dans un réseau de distribution de contenus, un contenu souhaité par un utilisateur du terminal 10 à réception d'une commande de mise en cache émise par le serveur mandataire 20. L'utilisateur utilise par exemple une interface homme-machine du module de navigation 12 afin de sélectionner le contenu souhaité. Le module de navigation 12 est agencé pour obtenir le contenu requis auprès d'un fournisseur de contenus 40. Un deuxième terminal 10' sur lequel s'exécute un module de navigation 12' associé au serveur mandataire 20 est également représenté. Le module de navigation 12' est agencé pour obtenir un contenu mis en cache dans un réseau de distribution de contenus. Par la suite un contenu demandé fera indifféremment référence à un contenu demandé par un utilisateur du terminal 10, ou à une demande relative au contenu émise par le module de navigation 12.

Le serveur mandataire 20 est par exemple localisé dans un réseau 2. Le serveur mandataire est en particulier un équipement physique qui n'est pas administré par le fournisseur d'accès Internet qui gère le réseau 1. Le serveur mandataire 20 est par exemple dédié à l'accélération des requêtes émises par les modules de navigation qui lui sont associés. Il est en outre agencé pour contrôler un état des sessions en cours entre les module de navigation 12, 12' et le fournisseur de contenus 40. Dans un autre mode de réalisation, le serveur mandataire 20 est un module intégré à un équipement du réseau 2 (e.g. routeur, passerelle d'accès).

Le serveur de contrôle 30 est une entité permettant de centraliser la gestion des différents réseaux de distribution de contenus du réseau 1. Il est localisé dans un réseau de communication 1 et communique avec des réseaux de distributions de contenus 100,102 localisés également dans le réseau 1. Le réseau 1 est par exemple le réseau d'un fournisseur d'accès Internet. Le serveur de contrôle 30 communique en outre avec le serveur mandataire 20.

Dans ce premier mode de réalisation, une demande relative à un contenu C est émise depuis le module de navigation 12 à destination du fournisseur de contenus 40. Cette demande est par exemple une requête conforme au protocole HTTP 2.0/TLS et relative à une ressource audio ou vidéo fournie par le fournisseur de contenus 40.

Selon un fonctionnement connu pour ce type de module de navigation 12, des informations relatives aux contenus demandés et aux contenus obtenus sont envoyées à intervalles réguliers au serveur mandataire 20. Ces informations permettent au serveur mandataire 20 d'identifier ces contenus. Ceci est particulièrement utile pour les demandes relatives à des contenus envoyées par l'intermédiaire de sessions chiffrées, ces contenus ne pouvant dans ce dernier cas être identifiés à partir des demandes elles-mêmes. Dans un mode de réalisation, les informations sur les contenus demandés et/ou obtenus sont ensuite transmises au serveur de contrôle 30. Le serveur de contrôle 30 est agencé pour sélectionner à l'aide de ces informations un réseau de distribution de contenus adapté à la distribution des types de contenus identifiés, dans lequel mettre en cache le contenu. Il est également agencé pour indiquer ensuite au serveur mandataire 20 le réseau de distribution 100 sélectionné pour la mise en cache du contenu. Le serveur mandataire 20 est agencé pour commander au module de navigation 12, la mise en cache du contenu C qui lui a précédemment été délivré, dans le réseau de distribution de contenus 100 sélectionné par le serveur de contrôle 30. A réception de la commande de mise en cache, le module de navigation 12 envoie le contenu C au réseau de distribution de contenus 100 sélectionné.

Dans un mode de réalisation particulier, le système de mise en cache ne comprend pas de serveur de contrôle 30. Dans ce cas, le serveur mandataire 20 commande par exemple la mise en cache du contenu identifié dans un réseau de distribution de contenus 100, 102 prédéfini.

Dans un mode de réalisation particulier, le serveur mandataire 20 est également agencé pour envoyer un identifiant du contenu mis en cache aux modules de navigation ayant une session établie avec le serveur mandataire. Un deuxième terminal 10' ayant une session établie avec le serveur mandataire 20 est alors apte à demander le contenu mis en cache par le terminal 10 directement auprès du réseau de distribution de contenus 100.

Seul deux terminaux 10, 10' sont représentés, il n'existe cependant pas de limitation quant au nombre de terminaux associés au serveur mandataire 20.

Dans un autre mode de réalisation le serveur mandataire est localisé dans le réseau 1 mais n'est pas administré par le fournisseur d'accès Internet ou l'opérateur du réseau 1.

La **figure 1b** représente un système de mise en cache d'un contenu dans un réseau de distribution de contenus selon un deuxième mode particulier de réalisation. Dans ce deuxième mode de réalisation, le serveur mandataire 20 est un équipement du réseau 2 en coupure des échanges entre le terminal utilisateur 10 et le fournisseur de contenus 40. Toutes les demandes relatives à un contenu émises par le module de navigation 12 s'exécutant sur le terminal utilisateur 10, transitent par le serveur mandataire 20. Ces demandes sont plus particulièrement envoyées depuis le module de navigation 12 via une session chiffrée établie avec le serveur mandataire 20. Elles sont ensuite redirigées vers le fournisseur de contenus 40 destinataire de la demande relative au contenu. Cette localisation particulière du serveur mandataire 20 permet notamment à ce dernier de disposer immédiatement d'informations sur le contenu demandé sans attendre que ces informations lui soient envoyées par le module de navigation 12 après la livraison du contenu C.

Les autres éléments du système sont identiques à ce qui a été décrit précédemment en relation avec la figure la.

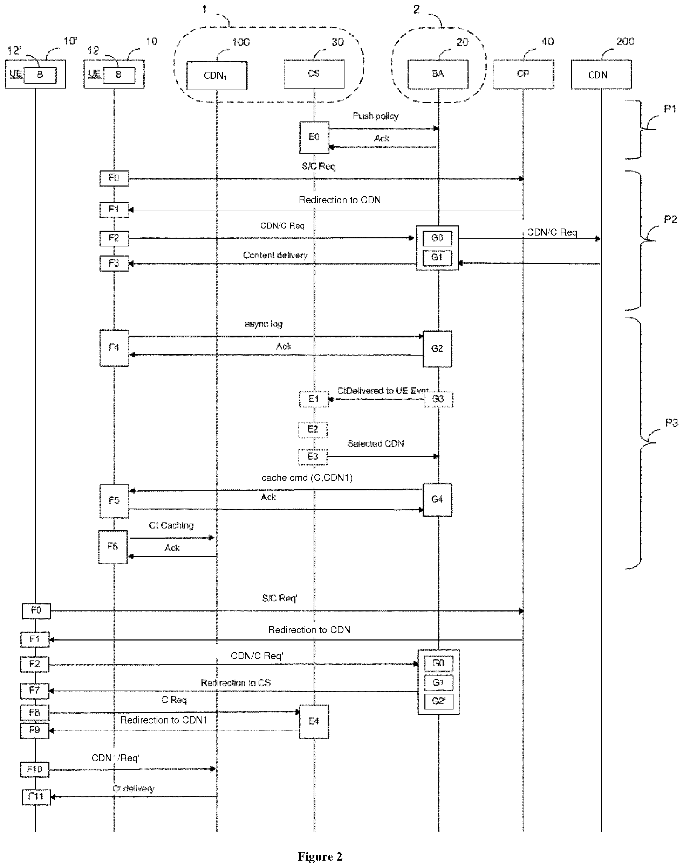

La **figure 2** représente un schéma synoptique des étapes du procédé de mise en cache d'un contenu et des échanges entre les équipements mettant en œuvre le procédé dans un système selon la figure la. Les étapes permettant d'obtenir le contenu, une fois ce dernier mis en cache sont également représentées.

Le procédé est composé de trois phases P1, P2, P3. La première phase P1 constitue une phase de configuration d'un système de mise en cache tel que décrit en relation avec la figure la. La deuxième phase P2 correspond à une première livraison à un terminal utilisateur 10, d'un contenu C demandé par l'intermédiaire d'un module de navigation 12 s'exécutant sur le terminal utilisateur 10. La troisième phase P3 correspond quant à elle, aux étapes du procédé permettant la mise en cache effective du contenu C dans un réseau de distribution de contenus CDN₁ 100 appartenant au réseau 1.

Lors de la première phase P1, un serveur de contrôle 30, localisé par exemple dans le réseau 1 d'un fournisseur d'accès Internet, transmet lors d'une étape E0 une politique de mise en cache au serveur mandataire 20 localisé dans un réseau 2 non géré par le fournisseur d'accès Internet. La politique de mise en cache définit une liste d'adresses universelles pour lesquelles le procédé de mise en cache est mis en œuvre. Ces adresses universelles sont par exemple des adresses de serveurs de fournisseurs de contenus ou encore de réseaux de distribution de contenus proposant des contenus. Elles peuvent également se réduire à un nom de domaine, indiquant ainsi que le procédé de mise en cache doit être mis en œuvre pour l'ensemble des contenus fournis pour ce nom de domaine. La liste d'adresses universelles permet en particulier de différencier les contenus à mettre en cache dans le réseau 1 du fournisseur d'accès Internet, de ceux pour lesquels une telle mise en cache n'est pas recherchée. Elle référence par exemple des fournisseurs de contenus partenaires du fournisseur d'accès Internet, pour lesquels une mise en cache dans le réseau 1 de ce fournisseur est recherchée. Cette liste peut également comprendre un indicateur d'un niveau de qualité au-delà duquel une mise en cache est souhaitée. L'envoi à l'étape E0 de la politique de mise en cache peut également s'accompagner d'un ensemble d'instructions exécutables (e.g. code javascript) par des terminaux utilisateurs ou d'un fichier dit « manifest » répertoriant une liste d'adresses de segments d'un contenu (« chunk ») associées à un niveau de qualité. Cette liste d'instructions exécutables, ainsi que le fichier manifest seront détaillés par la suite.

Toujours, lors de cette étape E0, le serveur mandataire 20 transmet un acquittement au serveur de contrôle 30 afin d'indiquer à ce dernier la bonne réception de la politique de mise en cache. Dans un autre mode de réalisation, cet acquittement comprend une liste d'identifiants de terminaux utilisateurs ayant une session établie avec le serveur mandataire 20. Cette dernière liste peut en outre être filtrée afin de comprendre uniquement des identifiants de terminaux utilisateurs abonnés aux services du fournisseur d'accès Internet.

La première phase P1 se termine par la réception de l'acquittement du serveur mandataire 20. Cette phase est répétée à intervalles réguliers afin que le serveur mandataire 20 puisse disposer d'une politique de mise en cache à jour.

Dans la deuxième phase P2, le module de navigation 12 envoie lors d'une étape F0 une demande relative à un contenu C, à un fournisseur de contenus 40 par l'intermédiaire d'une session chiffrée. A titre d'exemple illustratif, la demande relative au contenu C est une requête HTTP2/TLS « Get www.svr.fr/C ». Le fournisseur de contenus 40 retourne en réponse à cette requête un message de redirection vers un réseau de distribution de contenus 200 localisé à l'extérieur du réseau 1 du fournisseur d'accès Internet, où le contenu est mémorisé. Ce message de redirection est reçu par le module de navigation 12 lors d'une étape F1.

Lors d'une étape F2, la demande relative au contenu C est redirigée par le serveur mandataire 20 vers le réseau de distribution de contenus 200. On souligne ici que ce réseau ne dispose pas de serveurs localisés dans le réseau 1. Ainsi, la livraison du contenu à partir de ce réseau de distribution de contenus met à contribution un nombre important d'équipements du réseau de communication 1.

Plus précisément la demande relative au contenu C est transmise par l'intermédiaire d'une session chiffrée TLS au serveur mandataire 20. Ce dernier vérifie lors d'une étape G0 que l'identifiant du réseau de distribution de contenus 200 appartient à la liste d'adresses universelles définie par la politique de mise en cache obtenue lors de la phase P1. On se place dans le cas particulier où l'identifiant du réseau de distribution de contenus appartient à la liste d'adresses. Le serveur mandataire 20 vérifie alors lors d'une étape G1, à l'aide de l'identifiant du contenu demandé, si ce dernier a déjà été mis en cache dans un réseau de distribution de contenus du réseau 1. Pour cela l'identifiant du contenu demandé est par exemple comparé à une liste d'identifiants de contenus mis en cache, mémorisée par le serveur mandataire 20. Le contenu C n'étant pas identifié comme ayant déjà été mis en cache dans un réseau de distribution de contenus du réseau 1, le serveur mandataire 20 transmet la demande relative au contenu C au réseau de distribution de contenus 200 dans lequel ce contenu est mémorisé. Le contenu C est ensuite envoyé au module de navigation 12, qui le reçoit lors d'une étape F3. Cette réception du contenu C par le module de navigation 12 correspond à une première réception du contenu par le module de navigation avant sa mise en cache dans le réseau 1, et termine la deuxième phase P2.

Dans le cas où, à l'étape G0, l'identifiant du réseau de distribution de contenus 200 n'est pas identifié comme appartenant à la liste d'adresses universelles définie par la politique de mise en cache, la demande relative au contenu C est simplement transmise au réseau de distribution de contenus 200 conformément à la technique connue.

La troisième phase P3 débute avec l'envoi par le module de navigation 12 au serveur mandataire 20, lors d'une étape F4, d'informations relatives aux contenus obtenus par ce dernier. Ces informations sont par exemple un historique des demandes relatives à un contenu émises depuis le module de navigation 12. Elles comprennent en particulier l'identifiant du contenu C obtenu par le module de navigation 12 lors de la deuxième phase P2, ainsi qu'un identifiant du réseau de distribution de contenus 200 auprès duquel le contenu C a été obtenu.

Le serveur mandataire 20 envoie un acquittement au module de navigation 12, puis utilise les informations reçues du module de navigation 12 pour déterminer lors d'une étape G2 si le contenu C est un contenu à mettre en cache dans le réseau 1. Pour cela, de même que décrit précédemment pour les étapes G0 et G1, le serveur mandataire 20 vérifie que l'identifiant du réseau de distribution de contenus 200 correspond à une adresse pour laquelle une mise en cache dans le réseau 1 est souhaitée (étape G0), et que par ailleurs le contenu C n'a pas encore été mis en cache dans le réseau 1 (étape G1).

Dans un autre mode de réalisation le serveur mandataire 20 mémorise une liste de contenus à mettre en cache, mise à jour lors de la phase P1 suite aux étapes G0 et G1. L'étape G2 n'est pas mise en œuvre. Le contenu C est alors ajouté à la liste de contenus à mettre en cache à l'issue des étapes G0 et G1, c'est-à-dire lorsque d'une part, une mise en cache dans le réseau 1 est souhaitée pour le réseau de distribution de contenus 200 auprès duquel a été obtenu le contenu C, et que d'autre part, le contenu C n'a pas encore été mis en cache dans le réseau 1. Cette liste peut être mémorisée localement ou encore dans une base de données distante contrôlée par exemple par le fournisseur d'accès Internet. Il n'existe cependant pas de limitation quant à l'administration de cette base de données qui peut également être déléguée à une entité tierce.

En outre, dans le cas où lors de l'étape G2, le contenu C est identifié comme ayant déjà été mis en cache dans le réseau 1, cette étape G2 met fin au procédé de mise en cache.

Lorsque le contenu C est identifié comme étant un contenu à mettre en cache, le serveur mandataire 20 envoie alors dans une étape G3 une notification au serveur de contrôle 30. Cette notification informe ce dernier que le contenu C a récemment été délivré au module de navigation 12 s'exécutant sur le terminal utilisateur 10. Elle comporte notamment un identifiant du contenu C, ainsi qu'un identifiant du terminal utilisateur 10.

Le serveur de contrôle 30 sélectionne lors d'une étape E2 un réseau de distribution de contenus 100, 102 appartenant au réseau 1 en fonction de l'identifiant du contenu C et de celui du terminal utilisateur 10. L'identifiant du contenu C et celui du terminal utilisateur 10 sont donnés à titre d'exemple. Il n'existe aucune limitation quant aux critères utilisés pour la sélection du réseau de distribution de contenus par le serveur de contrôle 30. Le serveur de contrôle 30 permet de sélectionner le réseau de distribution de contenus le plus adapté pour mémoriser le contenu C dans le réseau 1. A titre d'exemple, le réseau de distribution de contenus 100 est associé par une politique du fournisseur d'accès Internet au type de terminal disposant du contenu C et au type de contenu C demandé, et est sélectionné.

Optionnellement le serveur de contrôle 30 peut également, lors de cette étape E2, mettre en œuvre une vérification qu'une mise en cache du contenu C est autorisée en fonction d'une politique de mise en cache définie par le fournisseur d'accès Internet. Une telle politique consiste par exemple à exclure d'une mise en cache dans le réseau les contenus de taille mémoire inférieure à un seuil.

Une fois le réseau de distribution de contenus 100 du réseau 1 sélectionné, le serveur de contrôle 30 transmet au serveur mandataire 20, lors d'une étape E3, un identifiant de ce réseau de distribution 100 pour la mise en cache du contenu C. Il mémorise également la mise en cache du contenu C dans le réseau de distribution de contenus 100.

Le serveur mandataire 20 envoie dans une étape G4 une commande de mise en cache du contenu C dans le réseau de distribution de contenus 100 au module de navigation 12. Lors d'une étape F5, ce dernier reçoit la commande de mise en cache et envoie un acquittement au serveur mandataire 20 pour l'informer de la bonne réception de la commande. L'envoi de la commande de mise en cache est plus particulièrement réalisé en mode dit « push », c'est-à-dire sans que l'envoi de la commande n'ait préalablement été sollicité par le terminal utilisateur 10. La commande de mise en cache comprend l'identifiant du contenu C à mettre en cache, l'identifiant du réseau de distribution de contenus sélectionné 100 pour la mise en cache du contenu C, et optionnellement des instructions de prétraitement du contenu avant sa mise en cache, exécutables par le terminal utilisateur 10. Les instructions de prétraitement permettent par exemple de convertir le contenu C dans un format donné, ou bien de le découper en plusieurs segments de données. Elles permettent également de complexifier l'accès à la politique de distribution des contenus mise en œuvre par le fournisseur d'accès Internet pour le serveur mandataire 20, ce qui renforce la confidentialité de cette dernière. Un fichier « manifest » peut également être associé à l'envoi de la commande de mise en cache. Le fichier « manifest » est par exemple obtenu du serveur mandataire lors de l'étape E0. Ce fichier comprend un ensemble d'adresses universelles vers des contenus classés par niveaux de qualité. Les adresses universelles du fichier « manifest » identifient par exemple des contenus qui ont précédemment été mis en cache. Dans un mode de réalisation, ce fichier peut avantageusement être utilisé par le terminal 10 pour maximiser le nombre de demandes directement adressées au réseau de distribution de contenus dans lequel un contenu a été mis en cache.

Lors d'une étape F6, le contenu C mémorisé sur le terminal utilisateur 10 est envoyé au réseau de distribution de contenus 100 identifié à l'aide de l'identifiant de réseau reçu avec la commande de mise en cache. Le cas échéant, les instructions de prétraitement du contenu sont exécutées par le terminal utilisateur 10 avant l'envoi du contenu au réseau de distribution de contenus 100. L'étape F6 met à la fois fin à la troisième phase P3 et au procédé de mise en cache.

Dans un autre mode de réalisation, la sélection d'un réseau de distribution de contenus par le serveur de contrôle 30 est optionnelle. Les étapes G3, et E1 à E3 ne sont alors pas mises en œuvre. Le réseau de distribution de contenus 100 dans lequel est mis en cache le contenu C est prédéfini par le fournisseur d'accès Internet. L'identifiant du réseau de distribution de contenus prédéfini est par exemple communiqué au serveur mandataire 20 lors de l'étape E0 de configuration du système.

Dans un autre mode de réalisation, lors de l'étape G0, la vérification que le contenu C est un contenu pour lequel une mise en cache est souhaitée est réalisée à partir d'un identifiant de contenu ou encore d'une adresse IP d'un fournisseur de contenus. Un contenu peut par exemple être explicitement désigné par une adresse universelle. Une plage d'adresses peut également être définie par un masque réseau appliqué à une adresse IP. Cette plage permet ainsi d'indiquer un ensemble de contenus à mettre en cache. Un contenu à mettre en cache peut également être identifié à partir d'un fichier « manifest ». Dans ce dernier cas un contenu est par exemple vérifié être un contenu à mettre en cache lorsque le niveau de qualité qui lui est associé dans le fichier « manifest » est supérieur à un niveau de qualité prédéfini par la politique de mise en cache reçue par le serveur mandataire 20 lors de l'étape E0. De même, le serveur de contrôle 30 peut indiquer au serveur mandataire 20, par l'intermédiaire de cette politique de mise en cache, un seuil de demandes relatives au contenu au-delà duquel l'étape G3 est mise en œuvre.

Dans un autre mode de réalisation, la sélection d'un réseau de distribution de contenus par le serveur de contrôle 30 est réalisée à partir d'informations reçues du serveur mandataire 20 relatives aux modules de navigation ayant une session établie avec ce dernier. Ces informations sont par exemple envoyées par le serveur mandataire 20 lors de l'acquittement de la réception de la politique de mise en cache à l'étape E0, ou lors de l'envoi d'une notification à l'étape G3. Elles peuvent également faire l'objet d'un envoi spécifique à destination du serveur de contrôle 30. Des informations relatives au niveau de qualité d'un contenu ou à un niveau de popularité du contenu peuvent également être prises en compte lors de la sélection du réseau de distribution de contenus. Ces informations sont par exemple des niveaux de qualité associés à des contenus référencés par un fichier « manifest » ou bien le nombre de requêtes de demande d'un contenu pendant un intervalle de temps prédéfini.

Dans un autre mode de réalisation en relation avec le système de la figure 1b, l'envoi au serveur mandataire 20, par le module de navigation 12, d'informations relatives aux contenus qu'il a obtenu est facultatif. Dans ce cas l'étape F4 n'est pas mise en œuvre. On rappelle ici que dans ce mode de réalisation, le serveur mandataire 20 est en coupure des échanges entre le terminal utilisateur 10 et le fournisseur de contenus 40.

Les étapes d'obtention d'un contenu mis en cache dans un réseau de distribution de contenus du réseau 1 vont maintenant être décrites.

De manière similaire à leur mise en œuvre décrite en relation avec la phase P1, les étapes F0 à F2, G0 et G1 sont de nouveau mises en œuvre. Ces étapes concernent une nouvelle demande relative au contenu C. Cette nouvelle demande est émise depuis un module de navigation 12' s'exécutant sur un terminal utilisateur 10'. A la différence de la phase P1, le contenu C est cette fois-ci identifié à l'étape G1 comme ayant déjà été mis en cache dans le réseau 1. Le serveur mandataire 20 ne transmet pas la demande vers le réseau de distribution de contenus 200, mais redirige la demande vers le serveur de contrôle 30 lors d'une étape G2'.

Le module de navigation 12' reçoit le message de redirection dans une étape F7, puis renvoie la demande relative au contenu au serveur de contrôle 30 dans une étape F8.

Ce dernier reçoit dans une étape E4 la demande relative au contenu C et transmet au module de navigation 12' un message de redirection vers le réseau de distribution de contenus 100 du réseau 1 dans lequel est mémorisé le contenu C.

Le module de navigation 12' reçoit le message de redirection dans une étape F9, et redirige lors d'une étape F10, la demande relative au contenu C vers le réseau de distribution de contenus 100 du réseau 1.

Le contenu C est reçu par le module de navigation 12' dans une étape F11.

Le procédé de mise en cache a été décrit pour une mise en cache d'un seul contenu donné à la fois. Dans un autre mode de réalisation, les messages échangés peuvent cependant facilement être adaptés afin de traiter plusieurs contenus simultanément. Dans ce cas, lors de l'étape G3, le serveur mandataire 20 notifie l'obtention de plusieurs contenus par le module de navigation 12 lors d'un même envoi. Le serveur mandataire 20 peut également notifier l'obtention de contenus pour différents modules de navigation ayant une session établie avec lui lors d'un même envoi. La sélection par le serveur de contrôle 30 du réseau de distribution de contenus lors de l'étape E2 peut alors tenir compte de l'ensemble des contenus notifiés par le serveur mandataire 20. Le serveur de contrôle 30 peut alors envoyer à l'étape E3 un identifiant de réseau de distribution de contenus sélectionné pour plusieurs contenus lors d'un même envoi. La commande de mise en cache est ensuite envoyée comme précédemment décrit lors de l'étape G4 à chaque module de navigation ayant obtenu un contenu à mettre en cache.

Dans un autre mode de réalisation, la politique de mise en cache transmise au serveur mandataire 20 lors de la phase P1 peut être transmise aux modules de navigation associés au serveur mandataire 20. Un module de navigation disposant de la politique de mise en cache est alors en mesure de déterminer, tel que décrit à l'étape G0, si le contenu d'une demande pour un contenu fourni par un fournisseur de contenus donné est à mettre en cache dans un réseau de distribution de contenus du réseau 1 selon le procédé de mise en cache, avant l'envoi effectif de la demande. La demande peut ainsi le cas échéant être directement envoyée vers le fournisseur de contenu sans intervention du serveur mandataire 20.

Dans un autre mode de réalisation, l'identifiant du contenu en association avec l'identifiant du réseau de distribution dans lequel le contenu a été mis en cache est envoyé aux modules de navigation ayant une session établie avec le serveur mandataire. Ainsi une prochaine demande émise depuis l'un de ces modules de navigation pour le contenu mis en cache peut être directement redirigée par ce module de navigation vers le réseau de distribution dans lequel le contenu a été mis en cache.

Le procédé a par ailleurs été décrit avec une mise en œuvre pour le protocole HTTP2.0/TLS, il peut cependant être adapté à tout type de protocole d'échange client-serveur présentant une même problématique d'accès à des contenus à mettre en cache dans un réseau de distribution de contenus particulier.

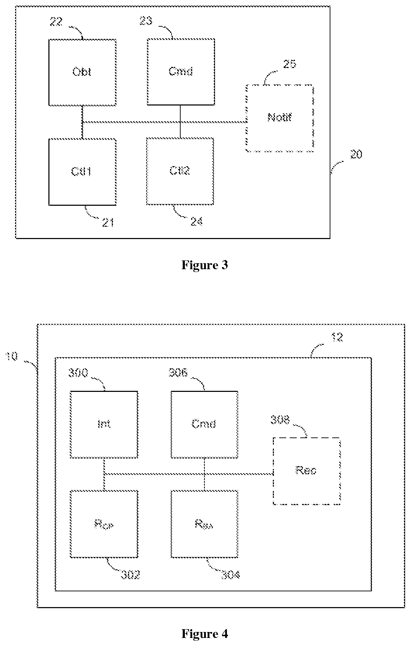

Un serveur mandataire va maintenant être décrit en relation avec la **figure 3**. Un tel serveur mandataire 20 comprend notamment :
- un premier module de contrôle 21, agencé pour contrôler un état de session en cours entre un module de navigation et un fournisseur de contenus ;
- un module d'obtention 22, agencé pour obtenir depuis un module de navigation, au moins une information relative à un contenu demandé depuis le module de navigation ;
- un module de commande 23, agencé pour commander à un module de navigation une mise en cache d'un contenu reçu depuis ce dernier, dans un réseau de distribution de contenus, la commande comprenant un identifiant de ce réseau de distribution ;
- un deuxième module de contrôle 24, agencé pour vérifier qu'un contenu a été mis en cache dans un réseau de distribution de contenus ;
- un module de notification 25, agencé pour notifier à un serveur de contrôle qu'un contenu a été délivré à un module de navigation.

Dans un autre mode de réalisation, le module de notification 25 est optionnel. Ceci est notamment le cas lorsque la mise en œuvre du procédé est effectuée sans serveur de contrôle 30.

La **figure 4** représente un module de navigation 12 agencé pour s'exécuter sur un terminal 10, ledit module comprenant :
- un sous-module d'interrogation 300, agencé pour accéder à des contenus au moyen de sessions chiffrées et pour envoyer une demande relative à un contenu à un fournisseur de contenus ;
- un premier sous-module de réception 302, agencé pour recevoir un contenu demandé depuis un fournisseur de contenus ;
- un deuxième sous-module de réception 304, agencé pour recevoir depuis un serveur mandataire, une commande de mise en cache dans un réseau de distribution de contenus, d'un contenu précédemment reçu ;
- un sous-module de commande 306, agencé pour commander suite à la réception de la commande de mise en cache, l'envoi d'un contenu précédemment reçu par le terminal sur lequel s'exécute ledit module, à destination d'un réseau de distribution de contenus ;
- un sous-module d'enregistrement 308, agencé pour enregistrer des informations sur les demandes relatives à un contenu émises depuis le module de navigation.

Dans un autre mode de réalisation, le sous-module d'enregistrement 308 est optionnel. Ceci est notamment le cas lorsque le procédé de mise en cache est mis en œuvre par un système selon le deuxième mode particulier décrit en relation avec la figure 1b.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 21, 22, 23, 24, et 25 sont agencés pour mettre en œuvre le procédé de mise en cache précédemment décrit. Il s'agit de préférence de modules logiciels comprenant des instructions logicielles pour faire exécuter celles des étapes du procédé de mise en cache précédemment décrit, mises en œuvre par un serveur mandataire.

Dans un mode de réalisation particulier, les sous-modules 300, 302, 304, 306, et 308 sont agencés pour mettre en œuvre le procédé de mise en cache précédemment décrit. Il s'agit de préférence de modules logiciels comprenant des instructions logicielles pour faire exécuter celles des étapes du procédé de mise en cache précédemment décrit, mises en œuvre par un terminal sur lequel s'exécute un module de navigation.

L'invention concerne donc aussi :
- un programme pour un serveur mandataire, comprenant des instructions de code de programme destinées à commander l'exécution des étapes du procédé de mise en cache précédemment décrit, lorsque ledit programme est exécuté par ledit serveur mandataire ;
- un support d'enregistrement lisible par un serveur mandataire sur lequel est enregistré le programme pour un tel serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de mise en cache d'un contenu C dans un premier réseau de distribution de contenus (100), ledit réseau de distribution étant un réseau d'un premier réseau de communication (1), un module de navigation (12) s'exécutant sur un terminal utilisateur (10) et permettant d'accéder à des contenus au moyen de sessions chiffrées, le module de navigation étant associé à un serveur mandataire (20) d'un deuxième réseau de communication (2) interconnecté avec le premier réseau de communication, ledit serveur mandataire contrôlant n état de session en cours entre le module de navigation et un fournisseur de contenus (40), ledit procédé comprenant les étapes suivantes :
- envoi (F0) par le module de navigation d'une demande relative au contenu C au fournisseur de contenus ;
- obtention (G2) par le serveur mandataire (20), depuis le module de navigation, d'au moins une information relative à ladite demande, l'information comprenant un identifiant du contenu C;
- transmission (G0) par le serveur mandataire (20) d'une demande relative au contenu C à un deuxième réseau de distribution de contenus (200), localisé à l'extérieur du premier réseau (1), dans lequel le contenu C est mémorisé;
- réception (F3) par le module de navigation du contenu C demandé en provenance du deuxième réseau de distribution de contenus (200);
- détermination par le serveur mandataire (20) si le contenu C est à mettre en cache dans le premier réseau de communication (1) ;
- commande (G4) par le serveur mandataire (20) au module de navigation, d'une mise en cache, du contenu C dans le premier réseau de distribution de contenus (100) du premier réseau de communication (1).

2. Procédé selon la revendication 1 dans lequel le contrôle de l'état de session en cours consiste à vérifier que la demande relative au contenu est redirigée par le serveur mandataire vers le fournisseur de contenu, après que ledit serveur mandataire ait reçu ladite demande via une session chiffrée établie avec le module de navigation, l'obtention de ladite au moins une information relative à la demande étant obtenue lors de la réception de la demande par le serveur mandataire.

3. Procédé selon la revendication 1 comprenant en outre les étapes suivantes mises en œuvre par un serveur de contrôle (30) appartenant au premier réseau de communication :
- réception (E1), depuis le serveur mandataire, d'une notification indiquant qu'au moins une demande relative au contenu a été émise par le terminal sur lequel s'exécute le module de navigation ayant émis la demande ;
- sélection (E2), en fonction du contenu et du terminal, d'un réseau de distribution de contenus dans lequel mettre en cache le contenu parmi un ensemble de réseaux de distribution de contenus appartenant au premier réseau de communication ;
- envoi (E3) au serveur mandataire d'un identifiant du réseau de distribution sélectionné.

4. Procédé selon la revendication 3, comprenant en outre une étape de réception par le serveur de contrôle, depuis le serveur mandataire, d'informations relatives à au moins un deuxième module de navigation ayant une session établie avec ledit serveur mandataire, la sélection du réseau de distribution de contenus étant réalisée à partir desdites informations.

5. Procédé selon la revendication 3, comprenant en outre une étape d'envoi (E0) par le serveur de contrôle, au serveur mandataire, d'une politique de mise en cache comprenant au moins une donnée pour laquelle une mise en cache du contenu est déclenchée.

6. Procédé selon la revendication 5, dans lequel ladite au moins une donnée est une liste d'adresses universelles, ledit procédé comprenant en outre une étape de vérification (G0), par le serveur mandataire, à l'aide de ladite au moins une information relative à la demande que ladite demande est à destination d'un fournisseur de contenus appartenant à ladite liste d'adresses universelles, la commande de mise en cache du contenu étant alors conditionnée par l'appartenance du fournisseur de contenus à ladite liste.

7. Procédé selon la revendication 3, comprenant les étapes suivantes :
- mémorisation par le serveur de contrôle d'un identifiant de contenu mis en cache en association avec un identifiant du réseau de distribution dans lequel le contenu a été mis en cache ;
et suite à la réception d'une demande ultérieure relative au contenu :
- vérification par le serveur mandataire, à l'aide de l'identifiant de contenu et de ladite au moins une information relative à la demande que le contenu demandé a été mis en cache ;
- redirection par le serveur mandataire de la demande vers le réseau de distribution dans lequel le contenu demandé a précédemment été mis en cache.

8. Procédé selon la revendication 7, comprenant en outre une étape d'envoi par le serveur mandataire de l'identifiant de contenu mis en cache en association avec l'identifiant du réseau de distribution dans lequel le contenu a été mis en cache à au moins un deuxième module de navigation ayant une session établie avec ledit serveur mandataire, une prochaine demande émise depuis ledit au moins un deuxième module de navigation pour le contenu demandé étant redirigée par ledit au moins un deuxième module de navigation vers le réseau de distribution dans lequel le contenu a été mis en cache.

9. Procédé selon la revendication 1, comprenant en outre l'envoi, au serveur mandataire, par le serveur de contrôle, d'un ensemble d'instructions exécutables par le module de navigation, ledit ensemble étant transmis, par le serveur mandataire, avec la commande demandant la mise en cache du contenu, et exécutées par le module de navigation préalablement à la mise en cache.

10. Module de navigation (12) comprenant des instructions de code de programme destinées à commander l'exécution des étapes suivantes, lorsque ledit module est exécuté sur un terminal (10) :
- accéder à des contenus au moyen de sessions chiffrées et pour envoyer (F0) une demande relative à un contenu C à un fournisseur de contenus (40) ;
- recevoir (F1) un message de redirection vers un deuxième réseau de distribution de contenus (200), localisé à l'extérieur d'un premier réseau de communication (1), dans lequel le contenu C est mémorisé ;
- recevoir (F3) le contenu C demandé depuis le deuxième réseau de distribution de contenus (200);
- envoyer (F4) à un serveur mandataire (20) l'identifiant du contenu C et un identifiant du deuxième réseau de distribution de contenus (200) auprès duquel le contenu C a été obtenu
- recevoir (F5) depuis le serveur mandataire, une commande de mise en cache dans un premier réseau de distribution de contenus (100) du premier réseau de communication (1), du contenu C précédemment reçu ;
- commander (F6) suite à la réception de la commande de mise en cache, l'envoi du contenu C précédemment reçu par le terminal sur lequel s'exécute ledit module, à destination du premier réseau de distribution de contenus (100) du premier réseau de communication (1).

11. Serveur mandataire (20), associé à un module de navigation (12), comprenant :
- un premier module de contrôle (21) agencé pour contrôler un état de session en cours entre le module de navigation (12) et un fournisseur de contenus (40);
- un module d'obtention (22) agencé pour obtenir depuis le module de navigation, au moins une information relative à un contenu C demandé, l'information comprenant un identifiant du contenu C (F0);
- un module de transmission agencé pour transmettre une demande relative au contenu C à un deuxième réseau de distribution de contenus (200), localisé à l'extérieur d'un premier réseau de communication (1), dans lequel le contenu C est mémorisé (F2) ;
- un module de détermination agencé pour déterminer (G2) si le contenu C est à mettre en cache dans un premier réseau de distribution de contenus (100) du premier réseau de communication (1) ;
- un module de commande (23) agencé pour commander (G4) au module de navigation une mise en cache du contenu C reçu depuis ce dernier, dans le premier réseau de distribution de contenus (100) du premier réseau de communication (1), ladite commande comprenant un identifiant dudit premier réseau de distribution (100) ;
- un deuxième module de contrôle (24) agencé pour vérifier qu'un contenu a été mis en cache dans un réseau de distribution de contenus.

12. Système de mise en cache d'un contenu dans un réseau de distribution de contenus (100), ledit réseau de distribution étant un réseau d'un premier réseau de communication (1), comprenant un module de navigation (12) selon la revendication 8 associé à un serveur mandataire (20) selon la revendication 11, ledit serveur mandataire appartenant à un deuxième réseau de communication (2) interconnecté avec le premier réseau de communication.

13. Système selon la revendication 12, comprenant en outre un serveur de contrôle (30), le serveur de contrôle appartenant au réseau de communication (1) et étant agencé pour :
- sélectionner le réseau de distribution de contenus dans lequel mettre en cache le contenu, et pour ;
- notifier le réseau de distribution de contenus sélectionné au serveur mandataire.

14. Programme pour un serveur mandataire, comprenant des instructions de code de programme destinées à commander l'exécution des étapes du procédé selon l'une des revendications 1 à 9, lorsque ledit programme est exécuté par ledit serveur mandataire.

15. Support d'enregistrement lisible par un terminal sur lequel est enregistré un module de navigation selon la revendication 10.

## Patentansprüche

1. Verfahren zur Zwischenspeicherung eines Inhalts C in einem ersten Inhalte-Verteilungsnetzwerk (100), wobei das Verteilungsnetzwerk ein Netzwerk eines ersten Kommunikationsnetzwerks (1) ist, wobei ein Navigationsmodul (12) auf einem Benutzerendgerät (10) ausgeführt wird, und es gestattet, mittels verschlüsselter Sitzungen auf Inhalte zuzugreifen, wobei das Navigationsmodul einem Proxy-Server (20) eines zweiten Kommunikationsnetzwerks (2) zugeordnet ist, das mit dem ersten Kommunikationsnetzwerk verbunden ist, wobei der Proxy-Server einen Zustand einer laufenden Sitzung zwischen dem Navigationsmodul und einem Inhalteanbieter (40) steuert, das Verfahren umfassend die folgenden Schritte:
- Senden (F0), durch das Navigationsmodul, einer Anforderung bezogen auf den Inhalt C an den Inhalteanbieter;
- Beziehen (G2), durch den Proxy-Server (20), von dem Navigationsmodul, mindestens einer Information bezogen auf die Anforderung, die Information umfassend eine Kennung des Inhalts C;
- Übertragen (G0), durch den Proxy-Server (20), einer Anforderung bezogen auf den Inhalt C an ein zweites Inhalte-Verteilungsnetzwerk (200), das sich außerhalb des ersten Netzwerks (1) befindet, in welchem der Inhalt C gespeichert ist;
- Empfangen (F3), durch das Navigationsmodul, des angeforderten Inhalts C von dem zweiten Inhalte-Verteilungsnetzwerk (200);
- Bestimmen, durch den Proxy-Server (20), ob der Inhalt C in dem ersten Kommunikationsnetzwerk (1) zwischenzuspeichern ist;
- Befehlen (G4), durch den Proxy-Server (20) dem Navigationsmodul, einer Zwischenspeicherung des Inhalts C im ersten Inhalte-Verteilungsnetzwerk (100) des ersten Kommunikationsnetzwerks (1).

2. Verfahren nach Anspruch 1, wobei die Steuerung des Zustands einer laufenden Sitzung darin besteht, zu überprüfen, dass die Anforderung bezogen auf den Inhalt durch den Proxy-Server zu dem Inhalteanbieter weitergeleitet wird, nachdem der Proxy-Server die Anforderung über eine verschlüsselte Sitzung empfangen hat, die mit dem Navigationsmodul aufgebaut ist, wobei der Bezug der mindestens einen Information bezogen auf die Anforderung beim Empfang der Anforderung durch den Proxy-Server erreicht wird.

3. Verfahren nach Anspruch 1, ferner umfassend die folgenden Schritte, die von einem Steuerungsserver (30) durchgeführt werden, der zu dem ersten Kommunikationsnetzwerk gehört:
- Empfangen (E1), von dem Proxy-Server, einer Benachrichtigung, die angibt, dass mindestens eine Anforderung bezogen auf den Inhalt durch das Endgerät gesendet wurde, auf dem das Navigationsmodul ausgeführt wird, das die Anforderung gesendet hat;
- Auswählen (E2), in Abhängigkeit von dem Inhalt und dem Endgerät, eines Inhalte-Verteilungsnetzwerks, in dem der Inhalt zwischenzuspeichern ist, aus einer Anordnung von Inhalte-Verteilungsnetzwerken, die zu dem ersten Kommunikationsnetzwerk gehören;
- Senden (E3) einer Kennung des ausgewählten Verteilungsnetzwerks an den Proxy-Server.

4. Verfahren nach Anspruch 3, ferner umfassend einen Schritt des Empfangens, durch den Steuerungsserver, von dem Proxy-Server, von Informationen bezogen auf mindestens ein zweites Navigationsmodul mit einer Sitzung, die mit dem Proxy-Server aufgebaut ist, wobei das Auswählen des Inhalte-Verteilungsnetzwerks anhand der Informationen erfolgt.

5. Verfahren nach Anspruch 3, ferner umfassend einen Schritt des Sendens (E0), durch den Steuerungsserver an den Proxy-Server, einer Zwischenspeicherungspolitik umfassend mindestens eine Angabe, für welche eine Zwischenspeicherung des Inhalts ausgelöst wird.

6. Verfahren nach Anspruch 5, wobei die mindestens eine Angabe eine Liste universeller Adressen ist, das Verfahren ferner umfassend einen Schritt des Überprüfens (G0), durch den Proxy-Server mithilfe der mindestens einen Information bezogen auf die Anforderung, dass die Anforderung an einen Inhalteanbieter gerichtet ist, der zu der Liste universeller Adressen gehört, wobei das Befehlen der Zwischenspeicherung des Inhalts dann durch die Zugehörigkeit des Inhalteanbieters zu der Liste bedingt ist.

7. Verfahren nach Anspruch 3, umfassend die folgenden Schritte:
- Speichern, durch den Steuerungsserver, einer Kennung zwischengespeicherten Inhalts in Verbindung mit einer Kennung des Verteilungsnetzwerks, in welchem der Inhalt zwischengespeichert wurde;
und nach dem Empfang einer späteren Anforderung bezogen auf den Inhalt:
- Überprüfen, durch den Proxy-Server, mithilfe der Kennung von Inhalt und der mindestens einen Information bezogen auf die Anforderung, dass der angeforderte Inhalt zwischengespeichert wurde;
- Weiterleiten, durch den Proxy-Server, der Anforderung an das Verteilungsnetzwerk, in welchem der angeforderte Inhalt zuvor zwischengespeichert wurde.

8. Verfahren nach Anspruch 7, ferner umfassend einen Schritt des Sendens, durch den Proxy-Server, der Kennung zwischengespeicherten Inhalts in Verbindung mit der Kennung des Verteilungsnetzwerks, in welchem der Inhalt zwischengespeichert wurde, an mindestens ein zweites Navigationsmodul mit einer Sitzung, die mit dem Proxy-Server aufgebaut ist, wobei eine nächste Anforderung, die von dem mindestens einen zweiten Navigationsmodul für den angeforderten Inhalt gesendet wird, durch das mindestens eine zweite Navigationsmodul an das Verteilungsnetzwerk weitergeleitet wird, in welchem der Inhalt zwischengespeichert wurde.

9. Verfahren nach Anspruch 1, ferner umfassend das Senden, an den Proxy-Server durch den Steuerungsserver, eines Satzes von Anweisungen, die durch das Navigationsmodul ausführbar sind, wobei der Satz durch den Proxy-Server mit dem Befehl übertragen wird, der die Zwischenspeicherung des Inhalts anfordert, und durch das Navigationsmodul vor der Zwischenspeicherung ausgeführt werden.

10. Navigationsmodul (12) umfassend Programmcode-Anweisungen zum Befehlen der Ausführung der folgenden Schritte, wenn das Modul auf einem Endgerät (10) ausgeführt wird:
- Zugreifen auf Inhalte mittels verschlüsselter Sitzungen und Senden (F0) einer Anforderung bezogen auf einen Inhalt C an einen Inhalteanbieter (40) zu senden (F0);
- Empfangen (F1) einer Nachricht zur Weiterleitung an ein zweites Inhalte-Verteilungsnetzwerk (200), das sich außerhalb eines ersten Kommunikationsnetzwerks (1) befindet, in welchem der Inhalt C gespeichert ist;
- Empfangen (F3) des Inhalts C, der von dem zweiten Inhalte-Verteilungsnetzwerk (200) angefordert wird;
- Senden (F4), an einen Proxy-Server (20), der Kennung des Inhalts C und einer Kennung des zweiten Inhalte-Verteilungsnetzwerks (200), bei dem der Inhalt C bezogen wurde;
- Empfangen (F5), von dem Proxy-Server, eines Befehls zur Zwischenspeicherung des zuvor empfangenen Inhalts C in einem ersten Inhalte-Verteilungsnetzwerk (100) des ersten Kommunikationsnetzwerks (1);
- Befehlen (F6), nach dem Empfang des Befehls zur Zwischenspeicherung, der Sendung des Inhalts C, der zuvor durch das Endgerät empfangen wurde, auf dem das Modul ausgeführt wird, an das erste Inhalte-Verteilungsnetzwerk (100) des ersten Kommunikationsnetzwerks (1).

11. Proxy-Server (20), der einem Navigationsmodul (12) zugeordnet ist, umfassend:
- ein erstes Steuermodul (21) das angeordnet ist, einen Zustand einer laufenden Sitzung zwischen dem Navigationsmodul (12) und einem Inhalteanbieter (40) zu steuern;
- ein Bezugsmodul (22), das angeordnet ist, von dem Navigationsmodul mindestens eine Information bezogen auf einen angeforderten Inhalt C zu beziehen, die Information umfassend eine Kennung des Inhalts C (F0);
- ein Übertragungsmodul, das angeordnet ist, eine Anforderung bezogen auf den Inhalt C an ein zweites Inhalte-Verteilungsnetzwerk (200) zu übertragen, das sich außerhalb eines ersten Kommunikationsnetzwerks (1) befindet, in welchem der Inhalt C gespeichert ist (F2);
- ein Bestimmungsmodul, das angeordnet ist, zu bestimmen (G2), ob der Inhalt C in einem ersten Inhalte-Verteilungsnetzwerk (100) des ersten Kommunikationsnetzwerks (1) zwischenzuspeichern ist;
- ein Befehlsmodul (23), das angeordnet ist, dem Navigationsmodul eine Zwischenspeicherung des Inhalts C, der von diesem empfangen wurde, in einem ersten Inhalte-Verteilungsnetzwerk (100) des ersten Kommunikationsnetzwerks (1) zu befehlen (G4), der Befehl umfassend eine Kennung des ersten Verteilungsnetzwerks (100);
- ein zweites Steuerungsmodul (24), das angeordnet ist, zu überprüfen, dass ein Inhalt in einem Inhalte-Verteilungsnetzwerk zwischengespeichert wurde.

12. System zur Zwischenspeicherung eines Inhalts in einem Inhalte-Verteilungsnetzwerk (100), wobei das Verteilungsnetzwerk ein Netzwerk eines ersten Kommunikationsnetzwerks (1) ist, umfassend ein Navigationsmodul (12) nach Anspruch 8, das einem Proxy-Server (20) nach Anspruch 11 zugeordnet ist, wobei der Proxy-Server zu einem zweiten Kommunikationsnetzwerk (2) gehört, das mit dem ersten Kommunikationsnetzwerk verbunden ist.

13. System nach Anspruch 12, ferner umfassend einen Steuerungsserver (30), wobei der Steuerungsserver zu dem Kommunikationsnetzwerk (1) gehört und angeordnet ist:
- das Inhalte-Verteilungsnetzwerk auszuwählen, in dem der Inhalt zwischenzuspeichern ist, und;
- das ausgewählte Inhalte-Verteilungsnetzwerk dem Proxy-Server zu melden.

14. Programm für einen Proxy-Server, umfassend Programmcode-Anweisungen zur Steuerung der Ausführung der Schritte des Verfahrens nach einem der Ansprüche 1 bis 9, wenn das Programm durch den Proxy-Server ausgeführt wird.

15. Speichermedium, das von einem Endgerät gelesen werden kann, auf dem ein Navigationsmodul nach Anspruch 10 gespeichert ist.

## Claims

1. Method for caching an item of content C in a first content distribution network (100), said distribution network being a network of a first communication network (1), a browser module (12) running on a user terminal (10) and providing for accessing content by means of encrypted sessions, the browser module being associated with a proxy server (20) of a second communication network (2) interconnected with the first communication network, said proxy server controlling the state of a session in progress between the browser module and a content provider (40), said method comprising the following steps:
- the browser module sending (F0) a request relating to the content C to the content provider;
- the proxy server (20) obtaining (G2) from the browser module at least one item of information relating to said request, the information comprising an identifier of the content C;
- the proxy server (20) transmitting (G0) a request relating to the content C to a second content distribution network (200), located outside the first network (1), in which the content C is stored;
- the browser module receiving (F3) the content C requested from the second content distribution network (200);
- the proxy server (20) determining whether the content C is to be cached in the first communication network (1);
- the proxy server (20) commanding (G4) the browser module to cache the content C in the first content distribution network (100) of the first communication network (1).

2. Method according to Claim 1, in which the control of the state of a session in progress consists in checking that the content-related request is redirected by the proxy server to the content provider, after said proxy server has received said request via an encrypted session established with the browser module, the obtaining of said at least one item of request-related information being obtained when the request is being received by the proxy server.

3. Method according to Claim 1, additionally comprising the following steps implemented by a control server (30) belonging to the first communication network:
- receiving (E1) from the proxy server, a notification indicating that at least one content-related request has been transmitted by the terminal on which the browser module that has transmitted the request is running;
- selecting (E2), according to the content and the terminal, a content distribution network in which to cache the content from among a set of content distribution networks belonging to the first communication network;
- sending (E3) to the proxy server an identifier of the selected distribution network.

4. Method according to Claim 3, additionally comprising a step of the control server receiving from the proxy server information relating to at least a second browser module having a session established with said proxy server, the content distribution network being selected based on said information.

5. Method according to Claim 3, additionally comprising a step of the control server sending (E0) to the proxy server a caching policy containing at least one item of data for which a caching of the content is triggered.

6. Method according to Claim 5, in which said at least one item of data is a list of uniform resource locators, said method additionally comprising a step of the proxy server checking (G0), with the aid of said at least one item of request-related information, that said request is to a content provider belonging to said list of uniform resource locators, the command to cache the content then being conditioned upon whether the content provider belongs to said list.

7. Method according to Claim 3, comprising the following steps:
- the control server storing a cached content identifier in combination with an identifier of the distribution network in which the content has been cached;
and following the reception of a further content-related request:
- the proxy server checking, with the aid of the content identifier and of said at least one item of request-related information, that the requested content has been cached;
- the proxy server redirecting the request to the distribution network in which the requested content was previously cached.

8. Method according to Claim 7, additionally comprising a step of the proxy server sending the cached content identifier in combination with the identifier of the distribution network in which the content has been cached to at least a second browser module having a session established with said proxy server, another request transmitted from said at least one second browser module for the requested content being redirected by said at least one second browser module to the distribution network in which the content has been cached.

9. Method according to Claim 1, additionally comprising the control server sending to the proxy server a set of instructions that can be executed by the browser module, said set being transmitted by the proxy server, with the command requesting the caching of the content, and being executed by the browser module prior to the caching.

10. Browser module (12) comprising program code instructions intended to command the execution of the following steps, when said module is executed on a terminal (10):
- accessing content by means of encrypted sessions and sending (F0) a request relating to an item of content C to a content provider (40);
- receiving (F1) a message of redirection to a second content distribution network (200), located outside a first communication network (1), in which the content C is stored;
- receiving (F3) the requested content C from the second content distribution network (200);
- sending (F4), to a proxy server (20), the identifier of the content C and an identifier of the second content distribution network (200) from which the content C has been obtained;
- receiving (F5) from the proxy server a command to cache in a first content distribution network (100) of the first communication network (1) previously received item of content C;
- commanding (F6), following reception of the caching command, the sending of the item of content C previously received by the terminal on which said module is running, to the first content distribution network (100) of the first communication network (1).

11. Proxy server (20), connected with a browser module (12), comprising:
- a first control module (21) arranged to control the state of a session in progress between the browser module (12) and a content provider (40);
- an obtain module (22) arranged to obtain from the browser module at least one item of information relating to a requested item of content C, the information comprising an identifier of the content C (F0);
- a transmission module arranged to transmit a request relating to the content C to a second content distribution network (200), located outside a first communication network (1), in which the content C is stored (F2);
- a determination module arranged to determine (G2) whether the content C is to be cached in a first content distribution network (100) of the communication network (1);
- a command module (23) arranged to command (G4) the browser module to cache the item of content C received by the latter in the first content distribution network (100) of the first communication network (1), said command containing an identifier of said first distribution network (100);
- a second control module (24) arranged to check whether an item of content has been cached in a content distribution network.

12. System for caching an item of content in a content distribution network (100), said distribution network being a network of a first communication network (1), comprising a browser module (12) according to Claim 8 associated with a proxy server (20) according to Claim 11, said proxy server belonging to a second communication network (2) interconnected with the first communication network.

13. System according to Claim 12, additionally comprising a control server (30), the control server belonging to the communication network (1) and being arranged to:
- select the content distribution network in which to cache the content, and to
- notify the proxy server of the selected content distribution network.

14. Program for a proxy server, comprising program code instructions intended to control the execution of the steps of the method according to one of Claims 1 to 9, when said program is executed by said proxy server.

15. Recording medium that can be read by a terminal, on which a browser module according to Claim 10 is recorded.
